# EUROPÄISCHE PATENTSCHRIFT

(11) **EP 0 527 122 B1**
(45) Veröffentlichungstag und Bekanntmachung des Hinweises auf die Patenterteilung: **07.12.1994**
(21) Anmeldenummer: 92890174.3
(22) Anmeldetag: 27.07.1992
(51) Int. Cl.: F02F 1/42, F02B 31/00

(54) **Mehrzylindrige Brennkraftmaschine mit innerer Gemischbildung**
Multi-cylinder internal combustion engine with internal mixture forming
Moteur à combustion interne à formage de mélange interne

(30) Priorität: 07.08.1991 AT 1568/91
(43) Veröffentlichungstag der Anmeldung: 10.02.1993
(73) Patentinhaber: AVL Gesellschaft für Verbrennungskraftmaschinen und Messtechnik mbH.Prof.Dr.Dr.h.c. Hans List, 8020 Graz (AT)
(72) Erfinder: Glanz, Reinhard, Dipl.-Ing., A-8042 Graz (AT); Krenn, Hermann, A-8020 Graz (AT); Valev, Assen, Dipl.-Ing. Dr., A-2380 Perchtoldsdorf (AT); Wagner, Johann, 37/A-8053 Graz (AT); Skatsche, Othmar, Dipl.-Ing., A-8010 Graz (AT); Breitenberger, Manfred, A-8020 Graz (AT)
(74) Vertreter: Krause, Walter, Dr. Dipl.-Ing.

(56) Entgegenhaltungen:
- DE-A- 1 906 443
- DE-A- 1 956 351
- FR-A- 2 193 147
- US-A- 4 703 729
- PATENT ABSTRACTS OF JAPAN vol. 9, no. 70 (M-367)(1793) 30. März 1985 & JP-A-59 201 929 (TOYODA CHUO KENKYUSHO K.K.) 15. November 1984

## Beschreibung

Die Erfindung betrifft eine mehrzylindrige Brennkraftmaschine mit innerer Gemischbildung, insbesondere Dieselmotor, mit pro Zylinder zwei Einlaßventilen, deren Achsen eine Ebene bestimmen, die angenähert parallel zur Motorlängsebene verläuft, zwei Einlaßkanälen zu den Einlaßventilen, die beide drallerzeugend ausgebildet sind, wobei ein mit optimaler Drallzahl ausgeführter erster Einlaßkanal von einer seitlichen Flanschfläche des Zylinderkopfes ausgeht.

Bei einer aus der DE-OS 1 906 443 bekannten Brennkraftmaschinen dieser Art gehen beide Einlaßkanäle von der gemeinsamen seitlichen Flanschebene aus. Dies hat den Nachteil, daß für drallerzeugende Kanäle bei gewissen Verhältnissen von Ventilposition und Flanschlage Zwänge entstehen, die eine optimale Auslegung der Kanäle hinsichtlich Drall und Durchfluß verhindern. Unter der Voraussetzung, daß die Verbindung der Ventilmitten parallel zur Motorlängsachse ist, wird es für diese, eine sehr einfache Ventilsteuerung erlaubende Anordnung, sehr schwierig, drallerzeugende Kanäle mit optimalem Durchfluß zu realisieren.

Es wird dabei einer der Kanäle sowohl als Tangential- oder Spiralkanal optimal den gewünschten Drall der Zylinderladung erzeugen. Um die für den zweiten Einlaßkanal günstigste Position zu finden, ist für einen Spiralkanal ein bestimmter Winkel α, der zwischen der die Ventil- und Zylindermitte verbindenden Geraden einerseits sowie der die Zylindermitte und ersten Spiralquerschnitt verbindenden Geraden andererseits liegt, einzuhalten.

Der durch Messung gefundene Verlauf der Drallzahl Dz in Abhängigkeit vom Winkel α, läßt das Maximum der Drallzahl Dz bei etwa 180 ° erkennen, sodaß dieser Winkel praktisch anzustreben ist, um optimale Drallwerte zu erreichen.

Aus konstruktiven Gründen ergeben sich dadurch verschiedene Probleme. Ist nämlich der Zulaufteil des ersten Kanales kurz und strömungsgünstig, so ergibt sich für die Spiralenlage des zweiten Kanals ein Winkel α von etwa 270 °. In diesem Bereich weist die Drallzahl Dz in Abhängigkeit vom Winkel α jedoch ein Minimum auf. Die Wirkung dieses Kanales ist daher durch niedrigeren Drall und geringeren Durchfluß drastisch verschlechtert.

Bei einer Anordnung, bei der die Spirale des ersten Kanals eine optimale Lage von α = 180 ° aufweist, muß der Kanalzulaufteil des zweiten Kanales stark gekrümmt werden. Eine beliebige Vergrößerung des Krümmungsradius des Kanalzulaufteiles ist wegen Überschneidung mit dem zum Nachbarzylinder führenden Kanal nicht möglich. Es kommt in diesem stark gekrümmten Zulaufteil zu Strömungsablösungen, die die Vorteile der guten Spiralanlage zunichte machen.

Auch beim Schrägkanal als zweiten Kanal treten ähnlich gelagerte Probleme auf: Da die Wirkung des Schrägkanales darauf beruht, die Luftströmung auf die Zylinderwand zu richten und damit eine drallbehaftete Strömung zu erzeugen, ist bei dieser Ventil-Flansch-Relation auch beim Schrägkanal die Notwendigkeit einer starken Krümmung sofort einsichtig, da andernfalls, bei geradem Schrägkanal, eine dem vom ersten Kanal erzeugten Drall entgegengesetzte Strömung erzeugt wird, die zwar zu hoher Turbulenz, aber zu keiner zylinderaxialen Drehbewegung führen kann.

Aufgabe der Erfindung ist es, eine Kanalanordnung zu schaffen, die trotz einer Ventilanordnung mehr oder weniger parallel zur Motorachse, eine optimale Drallerzeugung erlaubt.

Erfindungsgemäß wird dies dadurch erreicht, daß der als Spiralkanal ausgebildete zweite Einlaßkanal so ausgeführt ist, daß zumindest an einer Stelle vor dem Einlaßbereich die Kanalmittellinie etwa in Richtung der Zylinderachse liegt, so daß der zweite Einlaßkanal zur Erreichung einer hohen Drallzahl beider Einlaßkanäle mit einem optimalen Winkel von etwa 180°, der einerseits durch eine den Ventilmittelpunkt und den Zylindermittelpunkt verbindende Gerade gebildet wird, sowie andererseits durch den vom Ventilmittelpunkt ausgehenden Radius, der die Lage eines ersten Eintrittsquerschnittes der Spirale festlegt, ausgeführt wird. Infolge der damit erreichten Freizügigkeit bei der Anordnung der drallerzeugenden Kanäle, können optimale Verhältnisse bezüglich Drall und Strömung erreicht werden.

In einer weiteren Ausgestaltung der Erfindung ist vorgesehen, daß der zweite Einlaßkanal pro Zylinder von einer in Motorlängsrichtung liegenden Flanschebene ausgeht, die in einem Winkel im Bereich von 90°, vorzugsweise normal, zur Zylinderachse angeordnet ist. Dies hat den Vorteil, daß nun eine optimale Spiralanlage erreicht werden kann, ohne den Zulaufteil unzulässig stark krümmen zu müssen.

In einer bevorzugten Ausführungsvariante der Erfindung können beide Einlaßkanäle von der gleichen Flanschebene ausgehen. Dadurch kann ein einfaches, kostengünstiges und raumsparendes Einlaßröhrenwerk konzipiert werden.

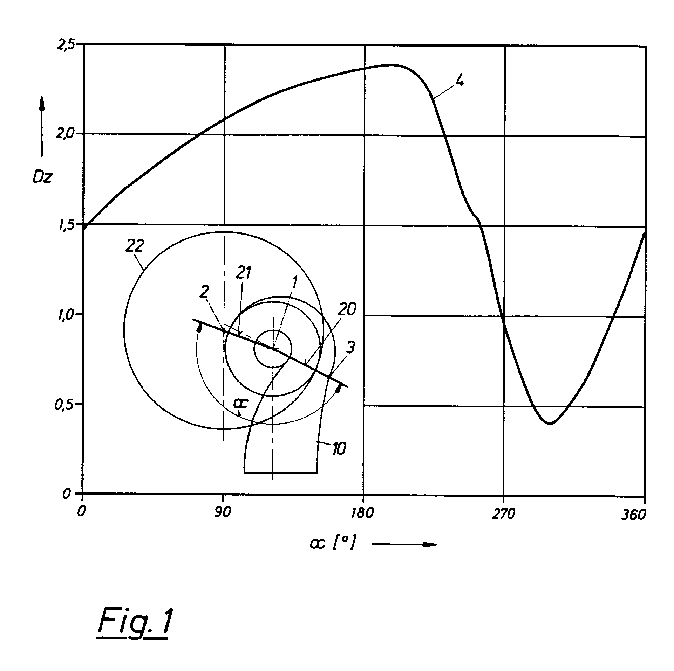

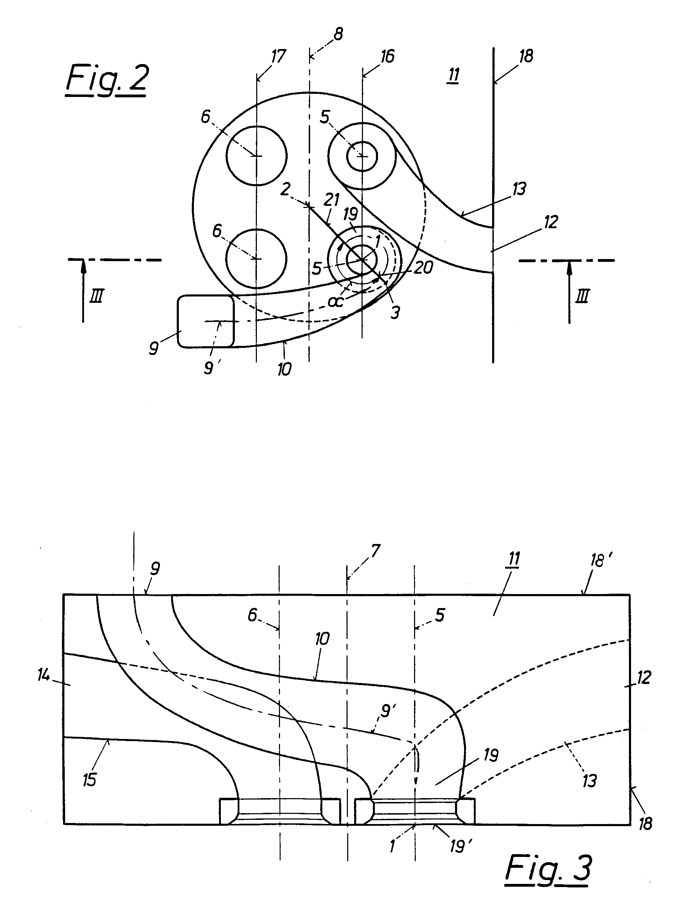

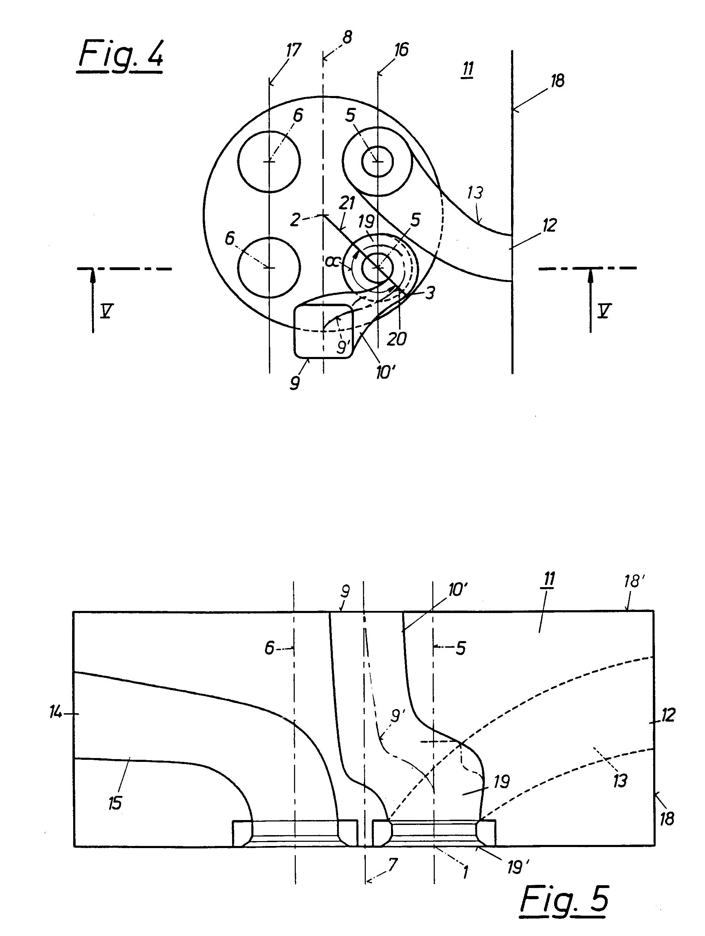

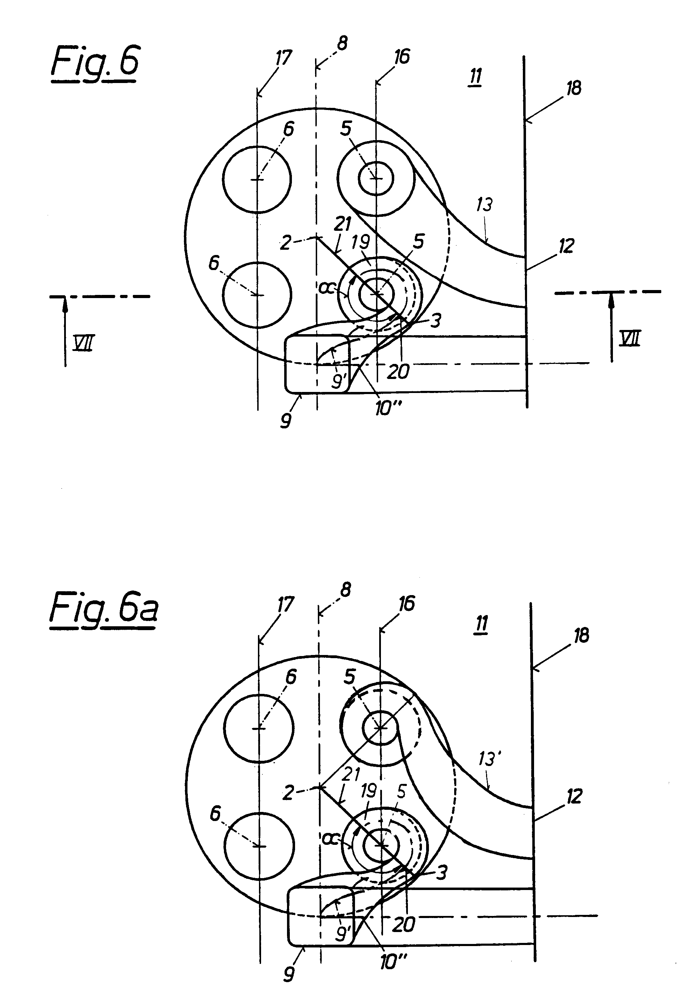

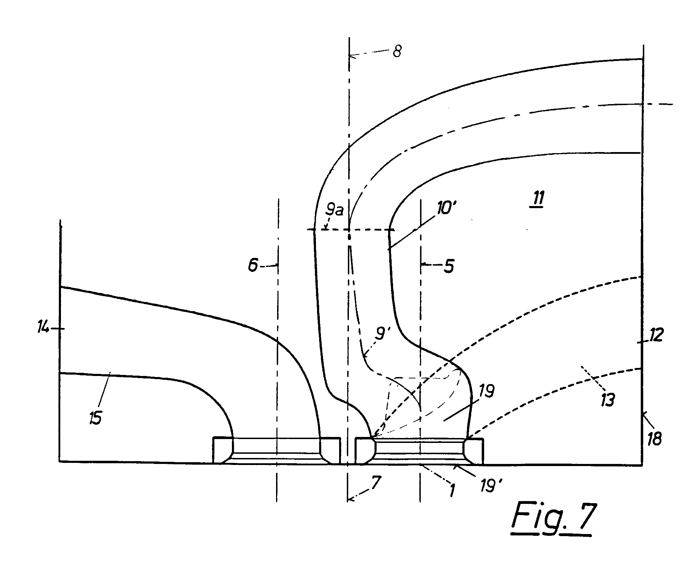

Im folgenden wird die Erfindung anhand der schematischen Zeichnungen näher erläutert. Es zeigen: Fig. 1 den Verlauf der Drallzahl Dz in Abhängigkeit von einem Bezugswinkel α, Fig. 2 ein Ausführungsbeispiel eines Zylinderkopfes gemäß der Erfindung in Draufsicht, Fig. 3 einen Schnitt nach der Linie III-III in Fig. 2 in größerem Maßstab, Fig. 4 ein anderes Ausführungsbeispiel gemäß der Erfindung und Fig. 5 einen Schnitt nach der Linie V-V in Fig. 4, ebenfalls in größerem Maßstab, Fig. 6 und 6a weitere Ausführungsbeispiele gemäß der Erfindung in Draufsicht und Fig. 7 dazu einen Schnitt nach der Linie VII-VII in Fig. 6 in größerem Maßstab. Gleiche oder gleichartige Teile sind mit denselben Bezugszeichen versehen.

In Fig. 1 ist die gemessene Drallzahl Dz in Abhängigkeit vom Winkel α dargestellt. Dabei ist der über der Zylinderbohrung 22 angeordnete Ventilmittelpunkt mit 1 bezeichnet. Der Winkel α wird gebildet von der dem Ventilmittelpunkt 1 und Zylindermittelpunkt 2 verbindenden Geraden 21 einerseits, sowie dem vom Ventilmittelpunkt 1 ausgehenden Radius 20, der die Lage des ersten Spiralquerschnittes 3 festlegt, andererseits. Man kann das Maximum 4 der Drallzahl Dz bei einem Winkel α von knapp über 180 ° erkennen.

Bei dem Zylinderkopf 11 nach Fig. 2 und 3 sind die Achsen der Einlaßventile mit 5 und jene der Auslaßventile mit 6 bezeichnet. Der Flansch 9 des als Spiralkanal ausgebildeten Einlaßkanales 10 ist auf der der Einlaßseite gegenüberliegenden Seite des Zylinderkopfes 11, senkrecht zur Zylinderache 7, angeordnet. Mit 9′ ist die Kanalmittellinie gekennzeichnet, die im Bereich des Flansches 9, etwa in Richtung der Zylinderachse, liegt. Der Flansch 12 des anderen, als Schrägkanal ausgebildeten Einlaßkanales 13 ist parallel zur Motorlängsebene 8 und liegt in der Flanschebene 18. Der Flansch 14 der beiden Auslaßkanäle 15 ist ebenso parallel zur Motorlängsebene 8 angeordnet. Der für die Drallzahl Dz maßgebliche Winkel α hat hier den angestrebten Wert von ca. 180°. Mit 19 ist der Einlaßbereich des Einlaßkanals 10 unmittelbar vor der Einlaßöffnung 19' in den Zylinder (nicht gezeichnet) bezeichnet. Dieser Einlaßbereich 19 ist, in Richtung der Zylinderachse 7 betrachtet, deckungsgleich mit der Einlaßöffnung 19'.

Die Ausführung des Zylinderkopfes nach Fig. 4 und 5 unterscheidet sich vom vorgenannten Ausführungsbeispiel im wesentlichen dadurch, daß der wiederum waagrecht liegende Flansch 9 des als Spiralkanal ausgebildeten Einlaßkanales 10' zwischen den beiden jeweils durch die Achsen 5 der Einlaßventile und die Achsen 6 der Auslaßventile bestimmten Ebenen 16 und 17 liegt. Die Anordnung der Flansche 14 der Auslaßkanäle 15 ist analog dem Ausführungsbeispiel nach Fig. 2 und 3. Auch hier hat der Winkel α den Optimalwert von 180°.

Bei den Ausführungsvarianten in Fig. 6, 6a und 7 gehen beide Einlaßkanäle 10'' und 13 von der gleichen Flanschebene 18 aus. Im Bereich der Motorlängsebene zeigt die Kanalmittellinie 9' in Richtung Zylinderachse 7, was durch die strichliert angedeutet Normalebene 9a auf die Kanalmittellinie 9' veranschaulicht ist. Wie in Fig. 7 ersichtlich, weist der zweite Einlaßkanal 10' eine ausreichend geringe Krümmung auf, sodaß in keinem Bereich des Einlaßkanales 10' die Gefahr einer Strömungsablösung besteht. Bei dem in Fig. 6a dargestellten Ausführungsbeispiel ist der erste Einlaßkanal 13, stellvertretend für sämtliche Ausführungsvarianten der Erfindung, als mit optimaler Drallzahl ausgelegter Spiralkanal ausgeführt.

## Patentansprüche

1. Mehrzylindrige Brennkraftmaschine mit innerer Gemischbildung, insbesondere Dieselmotor, mit pro Zylinder zwei Einlaßventilen (5), deren Achsen eine Ebene (16) bestimmen, die angenähert parallel zu einer durch die Zylinderachsen gebildeten Motorlängsebene (18) verläuft, zwei Einlaßkanälen (10, 10', 13) zu den Einlaßventilen, die beide drallerzeugend ausgeführt sind, wobei ein mit optimaler Drallzahl ausgeführter erster Einlaßkanal (13) von einer seitlichen Flanschfläche (12) des Zylinderkopfes ausgeht, **dadurch gekennzeichnet**, daß der als Spiralkanal ausgebildete zweite Einlaßkanal (10, 10') so ausgeführt ist, daß zumindest an einer stelle vor dem Einlaßbereich (19) die Kanalmittellinie (9') etwa in Richtung der Zylinderachse (7) liegt, so daß der zweite Einlaßkanal (10, 10') zur Erreichung einer hohen Drallzahl beider Einlaßkanäle mit einem optimalen Winkel (α) von etwa 180°, der einerseits durch eine den Ventilmittelpunkt (1) und den Zylindermittelpunkt (2) verbindende Gerade (21) gebildet wird, sowie andererseits durch den vom Ventilmittelpunkt (1) ausgehenden Radius (20), der die Lage eines ersten Eintrittsquerschnittes (3) der Spirale festlegt, ausgeführt wird.

2. Mehrzylindrige Brennkraftmaschine nach Anspruch 1, **dadurch gekennzeichnet**, daß der zweite Einlaßkanal (10, 10') pro Zylinder von einer in Motorlängsrichtung liegenden Flanschebene (18') ausgeht, die in einem Winkel im Bereich von 90°, vorzugsweise normal, zur Zylinderachse (7) angeordnet ist.

3. Mehrzylindrige Brennkraftmaschine nach Anspruch 1, **dadurch gekennzeichnet**, daß beide Einlaßkanäle (10'; 13) von der gleichen Flanschebene (18) ausgehen.

## Claims

1. Multi-cylinder internal combustion engine with internal mixture formation, especially a diesel engine, with two inlet valves (5) per cylinder, of which the axes define a plane (16) which extends approximately parallel to a longitudinal plane (8) of the engine containing the axes of the cylinders, two inlet passages (10, 10', 13) leading to the inlet valves and both designed to induce swirl, a first inlet passage (13) of optimum swirl-inducing shape leading from a lateral flange face (12) of the cylinder head, characterised in that the second inlet passage, which is in the form of spiral passage (10, 10'), is of such a shape that at least at one point ahead the inlet port (19) the centre line (9') of the passage lies approximately in the direction of the axis (7) of the cylinder, so that the second inlet passage (10, 10') is formed, in order to achieve a high degree of swirl in both inlet passages, with an optimum angle (α) of about 180° which is defined on the one hand by a straight line (21) joining the centre (1) of the valve and the centre (2) of the cylinder as well as on the other hand by the radius (20) from the centre (1) of the valve which defines the position of a first entry cross-section (3) of the spiral.

2. Multi-cylinder internal combustion engine according to claim 1, characterised in that the second inlet passage (10, 10') of each cylinder leads from a flange plane (18'), lying in the direction of the length of the engine, which is disposed at an angle in the neighbourhood of 90°, preferably perpendicular, to the axis (7) of the cylinder.

3. Multi-cylinder internal combustion engine according to claim 1, characterised in that both inlet passages (10'; 13) lead from the same flange plane (18).

## Revendications

1. Moteur thermique à plusieurs cylindres avec formation du mélange à l'intérieur du moteur, en particulier un moteur Diesel, comportant par cylindre deux soupapes d'admission (5) dont les axes définissent un plan (16) sensiblement parallèle au plan longitudinal (8) du moteur défini par les axes de cylindres, deux canaux d'admission (10, 10', 13) conduisant aux soupapes d'admission (5) et tous deux conçus pour produire un effet giratoire, un premier canal d'admission (13), présentant un indice giratoire optimal partant d'un plan (12) de bridage latéral de la culasse, caractérisé en ce que le deuxième canal d'admission (10, 10') est un canal en spirale dont la forme est telle qu'au moins dans une partie située en amont de la zone d'admission (19), la ligne médiane (9') de ce canal est sensiblement orientée selon l'axe du cylindre (7), tandis que le second canal d'admission (10, 10'), afin d'obtenir un indice giratoire élevé dans les deux canaux d'admission, est réalisé de manière à donner un angle optimal (α) environ de 180° compris entre d'une part une droite (21) reliant le centre (1) de la soupape et le centre (2) du cylindre, d'autre part le rayon (20) qui part du centre (1) de la soupape et qui détermine la position de la première section d'entrée (3) de la spirale.

2. Moteur thermique à plusieurs cylindres selon la revendication 1, caractérisé en ce que le second canal d'admission (10, 10') de chaque cylindre part d'un plan de bridage (18') parallèle à la direction longitudinale du moteur et faisant un angle de l'ordre de 90°, de préférence normal, avec l'axe (7) du cylindre.

3. Moteur thermique à plusieurs cylindres selon la revendication 1, caractérisé en ce que les canaux d'admission (10' ; 13) partent du même plan de bride (18).
